# EUROPÄISCHE PATENTSCHRIFT

(11) **EP 1 891 174 B1**
(45) Veröffentlichungstag und Bekanntmachung des Hinweises auf die Patenterteilung: **29.03.2017**
(21) Anmeldenummer: 06763531.8
(22) Anmeldetag: 06.06.2006
(51) Int. Cl.: C09D 123/00, C09D 133/00, C09D 167/00

(54) **HEISSVERSIEGELUNGSMASSE FÜR ALUMINIUM- UND POLYETHYLENTEREPHTHALATFOLIEN GEGEN POLYPROPYLEN- POLYVINYLCHLORID- UND POLYSTYROLBEHÄLTER**
HEAT-SEALING COMPOUND FOR SEALING ALUMINIUM FOIL AND POLYETHYLENE TEREPHTHALATE FILM TO POLYPROPYLENE, POLYVINYL CHLORIDE AND POLYSTYRENE CONTAINERS
COMPOSITION DE SCELLAGE A CHAUD POUR FEUILLES D'ALUMINIUM ET DE POLYETHLENE-TEREPHTALATE APPLIQUEES CONTRE DES RECIPIENTS EN CHLORURE DE POLYVINYLE ET EN POLYSTYRENE

(30) Priorität: 17.06.2005 DE 102005028432; 06.09.2005 DE 102005042389
(43) Veröffentlichungstag der Anmeldung: 27.02.2008
(73) Patentinhaber: Evonik Röhm GmbH, 64293 Darmstadt (DE)
(72) Erfinder: LÖHDEN, Gerd, 63457 Hanau (DE); BALK, Sven, 63457 Hanau (DE); BRAUM, Manfred, 55126 Mainz (DE); HARTMANN, Jürgen, 64347 Griesheim (DE); KAUFMANN, Marita, 64347 Griesheim (DE); WICKE, Michael, 64342 Seeheim-Jugenheim (DE)
(86) Internationale Anmeldenummer: PCT/EP2006/062933
(87) Internationale Veröffentlichungsnummer: WO 2006/134042

(56) Entgegenhaltungen:
- EP-A- 0 291 065
- US-A1- 2003 068 453
- US-A1- 2004 116 567

## Beschreibung

### Gebiet der Erfindung

Im Bereich der Verpackung von Lebensmitteln und Tabletten haben außer Polystyrol (PS) und Polyvinylchlorid (PVC) seit einiger Zeit auch Polypropylen (PP) und Polyethylenterephthalat (PET) Einzug gehalten. Unvorbehandeltes Polypropylen ist für den Lacksektor ein sehr kritischer Kunststoff, da sehr oft Haftfestigkeitsprobleme auftreten. Diese Problematik ist beim Heißversiegeln gegen Polypropylen zwar etwas anders gelagert (PP wird hier nicht beschichtet, sondern "verklebt"), aber doch ebenfalls vorhanden. So kann man die bei der Polystyrol- oder PVC-Versiegelung bewährten Poly(meth)acrylatharze wie z. B. DEGALAN ^{®} P 24 oder DEGALAN ^{®} N 80, nicht einsetzen, weil Siegelnahtfestigkeit mit ihnen nicht erreichbar ist.
DEGALAN ^{®} P24 ist ein Copolymer aus Methylmethacrylat und Butylmethacrylat und wird von der Röhm GmbH & Co. KG in den Handel gebracht. DEGALAN ^{®} N80 ist ein Methylacrylat-Ethylmethacrylat-Copolymer und wird ebenfalls von der Röhm GmbH & Co. KG in den Handel gebracht.
Mit DEGALAN ^{®} PM 555 (Hersteller: Röhm GmbH & Co. KG), einem speziellen, lösemittelhaltigen Bindemittelsystem auf Basis von Polyolefin/Poly(meth)acrylat in Butylacetat/Methylethylketon, ist es gelungen, ein Bindemittel zu entwickeln, das für die Versiegelung von Aluminiumfolien gegen Polypropylen hervorragend geeignet ist. Darüber hinaus ist es mit DEGALAN ^{®} PM 555 aber auch möglich, ebenso gute Versieglungen gegen Polystyrol und PVC durchzuführen. DEGALAN ^{®} PM 555 muss zur Erzielung der Aluminiumhaftung mit PVC-Mischpolymerisaten wie z. B. VINYLITE ^{®} VMCH grundiert, kann aber auch in entsprechender Kombination als Einschichtsystem eingesetzt werden. VINYLITE ^{®} VMCH ist ein säurehaltiges PVC-Polymer (Vertrieb: Union Carbide).

DEGALAN ^{®} 4150-E (Hersteller: Röhm GmbH & Co. KG) schließlich wurde entwickelt, um die bekannte Heißsiegelmasse für Aluminium- und Kunststofffolien so zu verbessern, dass anstelle des bisher üblichen lösungsmittelhaltigen Bindemittelsystems aus Butylacetat und Methylethylketon ein Lösungsmittelsystem eingesetzt werden kann, das nicht in der HAPS-Liste (Hazardous Air Pollutants) aufgelistet ist.

### Stand der Technik

An die Stelle von Gefäßen und Behältern aus Holz oder aus anorganischen Werkstoffen wie Metall, Glas, Keramik in der Lebensmittelverpackung sind in der Gegenwart vielfach Kunststoffprodukte getreten. Besonders hoch sind die Anforderungen in jedem Falle, wenn die Gefäße bzw. Behälter zur Aufnahme bzw. Konservierung von Lebensmitteln dienen.
Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, Kontrolle des Wassergehalts, sowie die Einwirkung der Atmosphäre und des Lichts zu berücksichtigen. (Vgl. Ullmann's Encyclopedia of Industrial Chemistry 25th Ed. Vol. A11, 523 - 560; 583 - 618 VCH 1988; dort werden auch die geltenden Normen abgehandelt).

Zum Verschließen von Kunststoffgefäßen werden in der Lebensmitteltechnologie, insbesondere bei Molkereiprodukten wie Joghurtbechern, weithin mit einem Siegellack beschichtete Aluminiumdeckel verwendet.

Vielfach stellen derartige Aluminiumdeckel ein dreischichtiges Laminat dar, dessen äußere Schicht häufig aus (biaxial orientiertem) Polyethylenterephthalat (O-PET), biaxial orientiertem Polypropylen (OPP) oder Polyamid (O-PA) oder aus Cellulose besteht. Die heißsiegelbare, innere Schicht besteht dagegen gewöhnlich aus Polyethylen, Ethylen-Copolymerisaten oder Polypropylen (US-A 4 753 708; G. Stehle, Neue Verpackung 9/91, S. 94 -101). Gegen die Verwendung von Aluminium z. B. zur Verpackung von Lebensmitteln werden aber mehr und mehr ökonomische und ökologische Gründe in die Diskussion gebracht, insbesondere der hohe Energieaufwand bei der Herstellung des Aluminiums.
Es kommen daher auch Kunststofffolien anstelle von Aluminium zur Anwendung, die mit einem siegelfähigen Lack versehen sind. Der Siegellack wird dabei dem verwendeten Kunststoff angepasst. Als relativ preisgünstiges Material für siegelfähige Folien mit guter mechanischer Festigkeit und guten Barriereeigenschaften spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann. Eine wachsende Bedeutung kommt PET-Folien zu. Üblicherweise werden PET-Folien mittels Polyvinylacetat bzw. Polyethylen/Polyvinylacetat oder Polyester-Lacken gesiegelt. Diese Systeme wurden jedoch spezifisch zur Siegelung von PET-Trägermaterialien entwickelt und sind nur bedingt geeignet zur Siegelung von Aluminium-Folien bzw. Aluminium-Beschichtungen auf Verbundfolien. Bis dato ist kein Heißsiegelbindemittel bekannt, dass bei geeigneter Formulierung sowohl zur Versiegelung von Aluminium- als auch von PET-Folien bzw. - Folienbeschichtungen geeignet ist.

In der DE-A 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen.

In der EP-A 0 406 681 wird aber zu Recht auf die Problematik bei Verwendung von heißsiegelfähigen Kunststoff-Folien anstelle von Aluminiumfolie hingewiesen. Einschränkend bemerkbar macht sich im Regelfall die wesentlich engere Verarbeitungsbreite. Überwiegend ergibt sich ein sehr enger Verarbeitungsbereich von 10 - 20 C, der ziemlich konstant eingehalten werden muss, um eine störungsfreie Produktion und einen einwandfreien Gebrauch der versiegelten Packung zu garantieren. Bei Abfüllanlagen mit mehreren Kavitäten zum gleichzeitigen Abfüllen von Bechern ist diese Voraussetzung nicht immer erfüllt. Die EP-A 0 406 681 hatte sich zur Aufgabe gesetzt, die nach dem Koextrusionsverfahren gemäß DE-A 35 31 036 herstellbaren Folien auf Polystyrolbasis u.a. so zu verbessern, dass die Verarbeitungsbreite und die Verarbeitungssicherheit vergrößert werden. Ferner sollte eine einwandfreie Produktion auch auf Abfüllanlagen mit mehreren Abfüllkavitäten sichergestellt werden. In der Praxis läuft dies auf die Anwendung höherer Siegeltemperaturen mit entsprechenden Anforderungen an die Qualität der Kunststoff-Folien hinaus. Nach der EP-A 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D zur Verbindung von jeweils zweien der Schichten A, gegebenenfalls B und C, bestehend aus 1 bis 50 % einer Schicht aus einem heißsiegelfähigen, schlagzähen Polystyrol A, bis zu 95 % einer Trägerschicht B und 1 bis 99 % einer hochschmelzenden Kunststoffschicht C, wobei die Summe der Stärken oder des Gewichts von A und gegebenenfalls B und C jeweils 100 ist.

DE 101 50 898 (Röhm) betrifft ein Heißsiegelsystem aus einem Olefinpolymer oder Olefincopolymer A, einem Methacrylatcopolymer B und einem Pfropfpolymerisat AX aus den obenstehenden Komponenten sowie einem Lösungsmittel oder Lösungsmittelgemisch. Das Heißsiegelsystem zeichnet sich durch hohe Wärmestandfestigkeit und kurze Siegelzeiten aus.

WO 2005/037548 (Showa Denko Plastic Products Co., Ltd.) beschreibt einen einfach zu öffnenden Verschluss für Verpackungen.

Der siegelnde Film besteht aus zwei Lagen:
- einer Siegelschicht
   und
- einer Grundierung.

Die Siegelschicht besteht aus
A) einem Copolymer aus Ethylen und Alkyl(meth)acrylaten oder Vinylester und
B) einem Polyesterharz.

Die Grundierung besteht aus der Komponente A der Siegelschicht und einem Polyolefin (C).

Die Nachteile des Systems bestehen in der Notwendigkeit der Grundierung und in der Tatsache, dass in der Grundierung die relativ hochwertigen Alkyl(meth)acrylate verwendet werden, die zu den Eigenschaften der Siegelschicht nichts beitragen können.

Das Polyester-Harz (B) verfügt darüber hinaus über einen recht hohen Schmelzpunkt, der die Herstellung der Schichten naturgemäß erschwert. Weiterhin ist nachteilig, dass die guten Eigenschaften der Beschichtung durch einen zweifachen Auftrag der Organischen Substanz erreicht werden.

EP 0 291 065 offenbart einen coextrudierten Film aus Polyolefinen und Polyester und keinen lackierten Film. In US 2003/0068453 darstellt ein extrudierter Blend aus dem Polyester und dem Polyolefin nur den "core layer" der Folie. Der zu versiegelnde "skin layer" besteht dabei nur aus einem Polyester.

### Aufgabe

Aufgabe war es, einen Heißsiegellackbindemittel zu entwickeln, das in einer Formulierung mit Polyestern dazu geeignet ist, sowohl Aluminium- als auch PET-Folien bzw. sowohl Aluminium- als auch PET-beschichtete Folien gegen sämtliche verwendeten Bechermaterialien wie Polystyrol, Polypropylen oder Polyvinylchlorid zu verschließen. Die Versiegelung sollte dazu gegenüber beiden Folienmaterialien über zumindest vergleichbare, wenn nicht bessere Siegel- und Barriereeigenschaften verfügen wie die bereits etablierten Heißsiegelsysteme (z.B. Degalan ^{®} PM 555) gegenüber Aluminiumfolien. Ferner soll dieses Bindemittel in einer Formulierung ohne Polyesterzugabe gegenüber etablierten Systemen gegen Aluminiumfolien eine mindestens gleichwertige Siegelleistung aufweisen.

Es bestand darüber hinaus die Aufgabe, hohe Haftfestigkeit bereits bei relativ hohen Temperaturen direkt nach der Versiegelung zu erreichen, (hohe Wärmestandfestigkeit), da so kurze Zykluszeiten beim Versiegeln der Folie und beim Lebensmittelverpacker erreicht werden.

Weiter bestand die Aufgabe, die bekannte Heißsiegelmasse für Aluminium- und Kunststofffolien so zu verbessern, dass anstelle des bisher üblichen lösungsmittelhaltigen Bindemittelsystems aus Butylacetat und Methylethylketon ein Lösungsmittelsystem eingesetzt werden kann, das nicht in der HAPS-Liste aufgelistet ist. Weiter ist anzustreben, dass bei den üblichen Taktzeiten, die bei der Heißsiegelung von Aluminium- oder Kunststofffolien angewandt werden, ausreichend hohe Festigkeiten des Verschlusses erreicht werden. Durch Umstellung des Lösungsmittelsystems soll schließlich eine zusätzliche Verbesserung der Siegeleigenschaften sowohl gegenüber Aluminium als auch - in geeigneter Formulierung - gegen PET-Folien erreicht werden.

Ferner bestand die Aufgabe, eine Heißsiegelmasse zu entwickeln, die im an den sich an das Auftragen der Heißsiegelmasse anschließenden Druckprozeß stabil bleibt. Bindemittel des Standes der Technik können nach kurzen Druckzeiten zu Ablagerungen auf den Transportwalzen der Druckmaschine führen, so dass ein sicherer Transport der zu bedruckenden Folie nicht mehr möglich ist. Die Druckmaschine muß angehalten werden, teilweise zerlegt, und gereinigt werden. Die dafür erforderlichen Rüst- und Reinigungszeiten stehen teilweise in keinem Verhältnis zur Maschinenlaufzeit. Mit den erfindungsgemäßen Bindemitteln ist ein problemloses Drucken über einen langen Zeitraum möglich.

### Lösung

Die Aufgabe wird gelöst durch eine filmbildende Dispersion gemäß Ansprüche 1 bis10 und Anspruch 13 mindestens vierer verschiedener Polymertypen A, B, AB, C und gegebenenfalls D oder D_{A}, wobei der
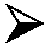 Polymertyp A ein Olefincopolymer oder ein Olefinpolymer ist,
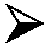 der Polymertyp B ein Methacrylatpolymer und
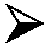 der Polymertyp AB ein Pfropfpolymer aus Polymertyp A und Polymertyp B ist und
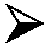 der Polymertyp C ein Polyester ist und
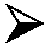 gegebenenfalls ein oder mehrere, von den Polymertypen A - C verschiedenen, weiteren Polymertypen D oder D_{A} und
einem Lösungsmittel oder Lösungsmittelsystem L, und wobei die Menge an Polymertyp A zwischen 15 Gew.-% und 65 Gew.-% betragt, die Menge an Polymertyp B zwischen 15 Gew.-% und 65 Gew.-% betragt, die Menge an Polymertyp AB zwischen 15 Gew.-% und 70 Gew, die Menge an Polymertyp C zwischen 5 Gew.-% und 50 Gew.-% betragt, die Menge an Polymertyp D zwischen 0 Gew.-% und 10 Gew.-% betragt, die Menge an Polymertyp Da zwischen 0 Gew.-% und 10 Gew.-% betragt, bezogen auf die Gesamtmasse der Polymertypen A - D, und wobei das Masseverhältnis der Summe der Polymertypen A - D zur Masse des Lösungsmittels Oder des Lösungsmittelgemischs L zwischen 5:1 und 1:5 betragt.

### Der Polymertyp A

Die erfindungsgemäß zu verwendenden Olefinpolymerisate und - Copolymerisate, entsprechend A, sind an sich bekannt. Es handelt sich in erster Linie um aus Ethylen-, Propylen-, Butylen- oder /und weiteren α-Olefinen mit 5-20 C-Atomen aufgebaute Polymerisate, wie sie bereits als heißsiegelfähige Massen empfohlen worden sind. Das Molekulargewicht liegt im Allgemeinen bei 10 000 bis 300 000, vorzugsweise zwischen 50 000 und 150 000. Olefincopolymerisate des anzuwenden Typs sind beispielsweise in den deutschen Offenlegungsschriften DE-OS 16 44 941, DE-OS 17 69 834, DE-OS 1939 037, DE-OS 19 63 039 und DE-OS 20 59 981 beschrieben.

Als Olefinpolymer kann beispielsweise Buna ^{®} 6170 (Hersteller: Lanxess AG) verwendet werden.

Besonders gut brauchbar sind Ethylen-Propylen-Copolymere; ebenfalls sind Terpolymere unter Zusatz der bekannten Terkomponenten, wie Äthyliden-Norbornen (vgl. Macromolecular Reviews, Vol. 10 1975) möglich, es ist jedoch deren Neigung zur Vernetzung beim Alterungsprozeß mit einzukalkulieren. Die Verteilung kann dabei weitgehend statistisch sein, es können aber auch mit Vorteil Sequenzpolymere mit Ethylenblöcken angewendet werden. Das Verhältnis der Monomeren Ethylen-Propylen ist dabei innerhalb gewisser Grenzen variabel, die bei etwa 95 % für Ethylen und etwa 95 % für Propylen als obere Grenze angesetzt werden können.

Die Mengen, die an Polymertyp A in der erfindungsgemäßen Mischung eingesetzt werden, liegen zwischen 15 Gew.-% und 65 Gew.-%, bevorzugt zwischen 20 Gew.-% und 60 Gew.-% und ganz besonders bevorzugt zwischen 25 Gew.-% und 55 Gew.-%.

### Der Polymertyp B

besteht definitionsgemäß aus Polyacrylat- und/oder Polymethacrylat-Sequenzen. Diese sind für sich genommen, z. B. in Form eines entsprechenden Homo- oder Copolymerisats. im Lösungsmittelsystem L löslich. Das Polymerisat B ist im Allgemeinen zu mehr als 50 Gew.-%, vorzugsweise zu 80 Gew.-% bis 100 Gew.-% aufgebaut aus Monomeren der Formel I 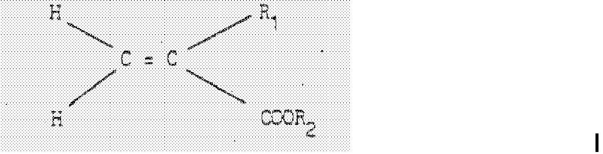 worin R₁ für Wasserstoff oder Methyl und R₂ für einen Alkylrest, einen aliphatischen oder aromatischen Rest mit 1 bis 30 Kohlenstoffatomen, vorzugsweise 1 bis 20 Kohlenstoffatomen, steht.

Im Polymer B können ferner enthalten sein:

### Monomere der Formel II

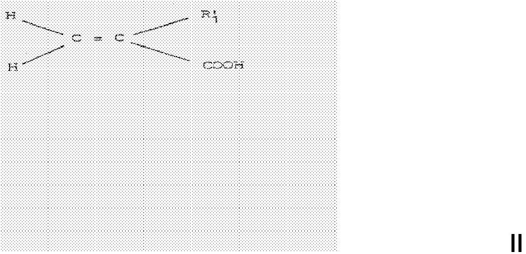

worin R'₁ für Wasserstoff oder Methyl steht oder/und polymerisationsfähige Säureanhydride und/oder Monomere der Formel III 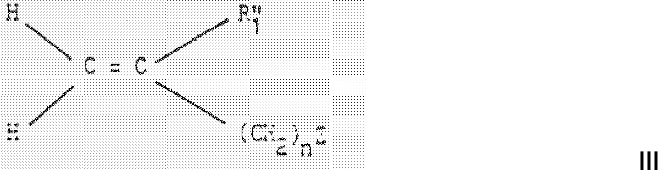 worin R"₁ Wasserstoff oder Methyl und Z einen gegebenenfalls alkylsubstituierterten Phenylrest, einen -COR₃-Rest, einen 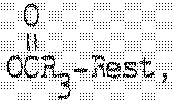 einen -OR₄-Rest oder ein Chloratom bedeutet und worin R₃ und R₄ für einen gegebenenfalls verzweigten Alkylrest mit 1 bis 20 Kohlenstoffatomen oder für einen Phenylrest und n für 0 oder 1 steht,
und/oder Monomeren der Formel IV 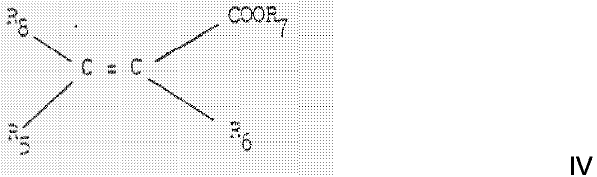 worin R₅ und R₆ Wasserstoff oder einen Rest -COOR'₇, R₆, Wasserstoff oder einen Rest --CH₂COOR"₇ bedeuten mit der Maßgabe. daß die Verbindung der Formel IV zwei carboxylhaltige Gruppen enthalten muß und worin R₇, R'₇ und R"₇ für Wasserstoff oder einen gegebenenfalls verzweigten Alkylrest mit 1 bis 20 Kohlenstoffatomen oder Phenyl stehen. Das Polymere B kann gegebenenfalls noch Anteile der Monomeren der Formel V enthalten 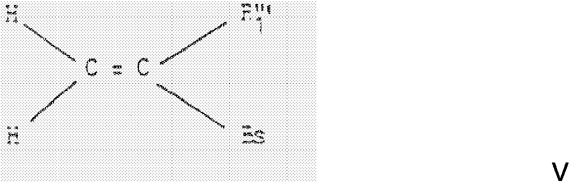 worin R"'₁ die Bedeutung von R₁ besitzt und Bs für einen stickstoffhaltigen funktionellen Rest wie eine -CN Gruppe, eine Gruppe -CONR₉R₁₀ worin R₉ und R₁₀ unabhängig voneinander für Wasserstoff oder einen Alkylrest mit 1 bis 20 Kohlenstoffatomen steht, oder worin R₉ und R₁₀ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierte Derivate derselben steht oder Bs die Bedeutung -CH₂OH besitzt, oder worin Bs die Bedeutung

-COO-Q-R₁₁

besitzt, worin Q für einen, gegebenenfalls alkylsubstituierten Alkylenrest mit 2 bis 8 Kohlenstoffatomen und R_{1I}, für -OH, für -OR"'₇ oder für einen Rest - NR'₉R'₁₀ steht, wobei R"'₇, R'₉ und R'₁₀ die gleichen Bedeutungen wie R₇, R₈ und R₉ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Als Beispiele für die Monomere der Formel I werden Methylmethacrylat, Ethylmethacrylat, Propylmethacrylat, Butylmethacrylat und Isobutylmethacrylat genannt. Die Monomere der Formel I werden auch als Standard(meth)acrylate bezeichnet.

Als Beispiele für die Monomere der Formel II werden Acrylsäure oder Methacrylsäure genannt.

Als Beispiele für Monomeren der Formeln III bzw. IV seien besonders genannt Styrol, α-Methylstyrol, Vinylchlorid, Vinylacetat, Vinyilstearat, Vinylmethylketon, Vinylisobutyläther, Allylacetat, Allylchlorid, Allylisobutylether, Allylmethylketon, Dibutylmaleinat, Dilaurylmaleinat, Dibutylitaconat. Der Anteil der Monomeren der Formel II-V am Polymer B liegt im Allgemeinen zwischen 0 Gew.-% und 50 Gew.-%, vorzugsweise bei 0 Gew.-% bis 20 Gew.-%, (bezogen auf die Monomeren des Polymer B). Der Anteil der Monomeren der Formeln II und/oder V am Polymer B wird im allgemeinen 20 Gew.-% nicht überschreiten, in der Regel liegt er bei 0 Gew.-% bis 10 Gew.-%, vorzugsweise 0 Gew.-% bis 5 Gew.-%.

Im Einzelnen wird das Polymer B nach Anteil und Zusammensetzung zweckmäßigerweise im Hinblick auf die gewünschte technische Funktion gewählt werden. Der Anteil der polaren Monomeren der Formeln II und V wird im Allgemeinen 20 Gew.-% nicht überschreiten, vorzugsweise liegt er bei 0 Gew.-% bis 10 Gew.-% (bezogen auf die Monomeren des Polymer B), besonders bevorzugt bei 0 Gew.-% bis 5 Gew.-%. Als Monomeren der Formel V seien C- und N-Vinylpyridin sowie Vinylpyrrolidin, Vinylpyrrolidon, Vinylcarbazol, Vinylimidazol sowie deren Alkylderivate, insbesondere die N-Vinylverbindungen genannt, ebenso die Hydroxyl- und Dialkylaminoalkylester der Acryl- bzw. der Methacrylsäure, speziell Dimethylaminoethyl(meth)- acrylat. Dirnethylaminopropyl(meth)acrylat, Hydroxyethyl(meth)acrylat.

Die Mengen, die an Polymertyp B in der erfindungsgemäßen Mischung eingesetzt werden, liegen zwischen 15 Gew.% und 65 Gew.-%, bevorzugt zwischen 20 Gew.-% und 60 Gew.-% und ganz besonders bevorzugt zwischen 25 Gew.-% und 55 Gew.-%.

Zusätzlich befindet sich im Heißsiegelsystem ein Polymerisat AB, welches ein durch B gepfropftes Polyolefin darstellt.

### Der Polymertyp AB

### Herstellung der Pfropfpolymerisate AB

Das Pfropfpolymerisat AB wird in der Regel hergestellt, indem man mit Hilfe eines geeigneten Emulgators eine Dispersion aus der Komponente A herstellt und auf diese die Komponente B unter den dafür geeigneten Reaktionsbedingungen aufpfropft. Der Emulgator kann einen dem System AB ähnlichen Aufbau besitzen. Die Verfahren zur Herstellung geeigneter Emulgatoren vom Typ AB sind an sich bekannt. So kann z. B. nach der Methode der Übertragungspfropfung vorgegangen werden: (Vgl. auch Houben-Weyl, Methoden der Org. Chemie, Bd. 1411, S. 114, H.A.J. Battaerd, G.W. Tregear, Polymer Reviews, Vol. 16, Interscience (1967)).

Dazu stellt man eine 10 Gew.-% - 50 Gew.-%, vorzugsweise 20 Gew.-% - 30 Gew.-%, Lösung eines OCP in einem geeigneten, unter Polymerisationsbedingungen inerten Lösungsmittel her, das im Normalfall einen Siedepunkt oberhalb der Verfahrenstemperatur besitzt. Als Lösungsmittel kommen z. B. Butylacetat, aliphatische cycloaliphatische und aromatische Kohlenwasserstoffe in Frage. Zu diesen OCP-Lösungen gibt man die Monomeren der Formel I bzw. eventuell die anderen Monomeren II-III in den angegebenen Verhältnissen und polymerisiert unter Zusatz eines oder mehrerer, vorzugsweise peroxidischer Radikal-Initiatoren bei Temperaturen von 60 Grad C - 50 Grad C innerhalb von gewöhnlich 4 - 8 Stunden. Anzustreben ist ein möglichst vollständiger Umsatz. Vorzugsweise finden Perester wie tert.-Butylperoctoat Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,2 Gew.-%, und 3 Gew.-%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, z. B. Dodecyirnercaptan. Die Konzentrationen an Reglern liegen im Allgemeinen bei 0.1 Gew.-%, bis 1,0 Gew.-%, bezogen auf das Gesamtpolymerisat. Eine weitere Methode zur Herstellung der Pfropfpolymerisate AB stellt die Hydroperoxidation eines OCP als ersten Schritt dar. Die auf diese Weise gebildeten, kettenständigen Hydroperoxydgruppen können in einer folgenden Stufe die Pfropfpolymerisation der Vinylmonomeren initiieren. (Vgl. H.A.J. Battaerd, G.W. Tregear, Polymer Reviews loc. cit.).

Ein Verfahren zur Herstellung von geeigneten Blockpolymerisaten besteht z. B. in der anionischen Polymerisation. Dabei kann man beispielsweise so vorgehen, daß man Isopren bzw. Butadien mit einem geeigneten anionischen Initiator (z. B. metallorganische Verbindung) polymerisiert und die "lebenden" anionischen Kettenenden mit z. B. Alkylmethacrylat bzw. Styrol umsetzt. Die so hergestellten Polymerisate werden anschließend unter Bedingungen hydriert, unter denen die vorhandenen funktionellen Gruppen nicht angegriffen werden. Bezüglich Einzelheiten der Herstellung sei auf die einschlägige Literatur verwiesen, z. B. Houben-Weyl, Methoden der Org. Chemie, 14/1, S. fff. ; Block Copolymers, 5 D.C. Allport, W.H. Janes, Appl. Sci. Publishers Ltd., London, 1973; Graft Copolymers, H.A.J. Battaerd, G.W. Tregear, Polymer Reviews Vol. 16 (1967); Block and Graft Polymers. W,J. Burlant, A.S. Hoffmann, Reinhold Publishers Corp., New York, 1960.

Die Mengen, die an Polymertyp AB in der erfindungsgemäßen Mischung eingesetzt werden, liegen zwischen 15 Gew.% und 70 Gew.-%, bevorzugt zwischen 20 Gew.-% und 65 Gew.-% und ganz besonders bevorzugt zwischen 25 Gew.-% und 55 Gew.-%.

### Der Polymertyp C

Als Polymertyp C wird erfindungsgemäß ein Copolyester verwendet, der unter der Marke DYNAPOL ^{®} von der Degussa AG in den Handel gebracht wird. Weiter können auch niedermolekulare Polyestertypen eingesetzt werden, ferner Polyester mit linearen oder verzweigten Alkylgruppen, die Polyester können auch durch hydroxylgruppenhaltige Alkylgruppen substituiert sein. Als Polymertyp C wird bevorzugt der Typ DYNAPOL ^{®} LS 415 eingesetzt, dies ist ein gesättigter, sehr hochmolekularer, linearer, stark elastifizierter Copolyester.

Folgende Eigenschaften hat der Polymertyp C im Falle von DYNAPOL ^{®} LS 415:

| Parameter | Wert | Einheit | Meßmethode |
|---|---|---|---|
| Viskositätszahl | 75 - 85 | cm³/g | DIN 53 728 |
| Säurezahl | < 3 | mg/KOH/g | DIN EN ISO 2 114 |
| Hydroxylzahl | 5 | mg/KOH/g | DIN 53 240 |
| Molmasse | 25.000 | g/mol | berechnet |
| Glastemperatur | 12 | °C | DSC |
| Erweichungstemperatur | 110 | °C | ISO 4 625 |
| Dichte bei 25 °C | 1,14 | g/cm³ | ISO 1 183 |

Die Viskositätszahl wurde an einer Lösung von 0,5 g Polyester und 100 g eines Gemisches aus Phenol/o-Dichlorbenzol (50/50 w/w) gemessen.

Folgende Eigenschaften hat der Polymertyp C im Falle von DYNAPOL ^{®} H 826-05/A:

| Parameter | Wert | Einheit | Meßmethode |
|---|---|---|---|
| Viskosität (23 Grad C) | 3,0 - 5,5 | Pa s | DIN EN ISO 3 219 |
| Säurezahl (lösungsmittelfrei) | < 3 | mg/KOH/g | DIN EN ISO 2114 |
| Hydroxylzahl (lösungsmittelfrei) | 18 - 24 | mg/KOH/g | DIN 53 240 |
| Molmasse | 6.000 | g/mol | berechnet |
| Glastemperatur (lösungsmittelfrei) | 30 | °C | DSC |
| nicht flüchtige Anteile | 55 ± 1 | Gew.-% | DIN EN ISO 3 251 |
| Dichte (20 °C) (Lieferlösung) | 1,08 | g/cm³ | DIN 51 757 |
| Farbzahl (Gardner) | > 3 | | DIN ISO 4 630 |
| Glastemperatur (lösungsmittelfrei) | 30 | °C | DSC |
| Flammpunkt | 58 | °C | DIN 53 213 |

Es handelt sich hierbei um ein gesättigtes, mittelmolekulares, lineares, hydroxylgruppenhaltiges Polyesterharz. Es wird in einem Lösungsmittelgemisch aus 80 Gew.-% Naphtha150 und 20 Gew.-% Naphtha 200 mit einem Gehalt von 55 Gew.-% in den Handel gebracht.

Folgende Eigenschaften hat der Polymertyp C im Falle von DYNAPOL ^{®} L 208:

| Parameter | Wert | Einheit | Meßmethode |
|---|---|---|---|
| Viskositätszahl | 65-75 | cm³/g | DIN 53 728 |
| Säurezahl | 4-10 | mg/KOH/g | DIN EN ISO 2 114 |
| Hydroxylzahl | 3-9 | mg/KOH/g | DIN 53 240 |
| Molmasse | 20.000 | g/mol | berechnet |
| Glastemperatur | 65 | °C | DSC |
| Erweichungstemperatur | 155 | °C | ISO 4 625 |
| Dichte bei 20 °C | 1,25 | g/cm³ | ISO 1 183 |

Die Viskositätszahl wurde an einer Lösung von 0,5 g Polyester und 100 g eines Gemisches aus Phenol/o-Dichlorbenzol (50/50 w/w) gemessen. Es handelt sich hier um einen gesättigten, hochmolekularen, verzweigten Polyester.

Folgende Eigenschaften hat der Polymertyp C im Falle von DYNAPOL ^{®} H 820-20:

| Parameter | Wert | Einheit | Meßmethode |
|---|---|---|---|
| Viskosität (23 Grad C) | 1,5 - 2,5 | Pa s | DIN EN ISO 3 219 |
| Säurezahl (lösungsmittelfrei) | < 3 | mg/KOH/g | DIN EN ISO 2114 |
| Hydroxylzahl (lösungsmittelfrei) | 15 - 25 | mg/KOH/g | DIN 53 240 |
| Molmasse | 5.000 | g/mol | berechnet |
| Glastemperatur (lösungsmittelfrei) | 60 | °C | DSC |
| nicht flüchtige Anteile | 40 ± 1 | Gew.-% | DIN EN ISO 3 251 |
| Dichte (20 °C) (Lieferlösung) | 1,07 | g/cm³ | ISO 1 183 |
| Farbzahl (Gardner) | > 3 | | DIN ISO 4 630 |
| Flammpunkt | 82 | °C | DIN 53 213 |

Es handelt sich hierbei um ein gesättigtes, mittelmolekulares, lineares, hydroxylgruppenhaltiges Polyesterharz. Es wird in einer Lösung in Naphtha 200 (40 Gew.-%) in den Handel gebracht.

Die Mengen, die an Polymertyp C in der erfindungsgemäßen Mischung eingesetzt werden, liegen zwischen 5 Gew.-% und 50 Gew.-%, bevorzugt zwischen 5 Gew.-% und 30 Gew.-% und ganz besonders bevorzugt zwischen 10 Gew.-% und 25 Gew.-%, wobei sich die Gewichtsangaben auf das Polymer ohne den eventuelle Lösungsmittelanteil beziehen.

### Der Polymertyp D oder D_{A}

Zur Verbesserung der Aluminium-Haftung ist eine Formulierung mit Polymertyp D eine Option: Durch eine Grundierung der Folie oder durch Zugabe von 0% Gew.-% bis 10% Gew.-%, besser von 0% Gew.-% bis 5% Gew.-% Polyvinylchlorid in die Lackformulierung kann eine Verbesserung der AI-Haftung beobachtet werden. Eingesetzt wird z.B. VINYLITE ^{®} VMCH (Vertrieb durch Union Carbide).

Polymertyp D_{A} kann optional zur Verminderung eines möglichen Abriebes in der Verarbeitung zugesetzt werden. Eingesetzt werden kann ein Polyamid z.B. des Typs VESTOSIND ^{®} 2159 (Fa. Degussa AG). Dieser kann in einem Formulierungsanteil zwischen 0% Gew.-% und 10% Gew.-%, besser zwischen 0% Gew.-% und 5% Gew.-% zugegeben werden.

Aus Vorversuchen ist bekannt, dass eine PET-Haftung mit einem wie oben beschriebenen Bindemittelsystem aus den Komponenten A, B, AB und gegebenenfalls D bzw. D_{A} in einem Lösungsmittelsystem aus n-Butylacetat und Ethylmethylketon (z.B. analog zu Degalan ^{®} PM 555) in Formulierung mit der Polymerkomponente C unabhängig von deren Konzentration nur mit unbefriedigenden Siegelfestigkeiten vorliegt. Eine Umstellung des Lösungsmittelsystems auf eine unten beschriebene, erfindungsgemäße Zusammensetzung führt dagegen in geeigneter Formulierung mit Polymerkomponente C zu sehr guten Heißsiegeleigenschaften.

### Das Lösungsmittel oder Lösungsmittelsystem L

Neben den Polymertypen A und B, dem Pfropfpolymer AB, dem Polymertyp C und gegebenenfalls dem Polymertyp D oder D_{A} befindet sich noch ein Lösungsmittelsystem in dem erfindungsgemäßen Heißsiegelsystem.

Die für das Lösungsmittelsystem L zu verwendenden Lösungsmittel sind so auszuwählen, dass sie den Erfordernissen der Beschichtungstechnologie für Kunststoffe und Metalle entsprechen. Die - gegebenenfalls im Gemisch - anzuwendenden Lösungsmittel sollen inert und im Ganzen unbedenklich sein, wobei der Siedepunkt 105 C bei 760 Torr möglichst nicht überschreitet.

Als Lösungsmittel kommt ein Gemisch aus Estern aliphatischer Carbonsäuren mit aliphatischen Alkoholen und aliphatischen Kohlenwasserstoffen in Frage.

Als aliphatische Carbonsäure kommen Essigsäure, Propinsäure oder Buttersäure in Frage.

Als aliphatische Alkohole kommen Ethanol, Propanol, Isopropanol, n-Butanol, 2-Butanol, 2-Methyl-1-propanol oder 2-Methyl-2-propanol in Frage.

Als aliphatische Kohlenwasserstoffe kommen Pentan, Hexan, Heptan, Oktan, iso-Octan, Nonan, Decan, Undecan oder Dodecan in Frage.

Die aliphatischen Kohlenwasserstoffe können auch in Form ihrer Isomerengemische und in Gemischen untereinander vorliegen. Es können auch Cycloalkane und substituierte Cycloalkane eingesetzt werden.

Bei der Auswahl von L ist auch auf die Verträglichkeit zwischen den Polymerkomponenten A und B zu achten. Im Falle der Unverträglichkeit zwischen A und B kann L für beide Komponenten ein gleich gutes Lösungsmittel darstellen, die Dispersion bildet sich dann aufgrund der Unverträglichkeit.

Im Falle der Verträglichkeit zwischen A und B muß L so gewählt werden, daß es bei gegebener Temperatur für B ein besseres Lösungsmittelsystem als für A darstellt, die Dispersion bildet sich dann aufgrund der unterschiedlichen Lösungsqualität. Erfindungsgemäß wird als Lösungsmittel L vorzugsweise ein solches gewählt, das die Olefincopolymerisate im Temperaturbereich zwischen 40 °C und 150 °C auf 5 Gew.-% bis 300 Gew.-% anquellen lässt ("Quellungsgrad").

Der Quellungsgrad ist folgendermaßen definiert: Ein OCP-Film von 1 mm Dicke, 2 cm Länge, 0,5 cm Breite mit bekanntem Gewicht wird bei einer definierten Temperatur - im beispielhaft belegten Falle bei 90 °C - in das Lösungsmittel eingetaucht und 24 Stunden lang isotherm gelagert, mit der Pinzette der Lösung entnommen, mittels eines Filterpapiers von anhaftendem Quellungsmittel befreit und unmittelbar anschließend gewogen. Als Maß für die Quellung wird die Gewichtszunahme in Prozent, bezogen auf das Ausgangsgewicht, definiert. Die Quellungsmessung soll bei der Temperatur, bei der die konzentrierte OCP-Dispersion hergestellt werden soll, durchgeführt werden. Erfindungsgemäß soll bei dieser Temperatur die Quellung 5 Gew.-% bis 300 Gew.-% betragen. Voraussetzung für die Anwendbarkeit des Kriteriums ist, dass unter den vorstehend angegebenen Bedingungen die maximale Quellung des OCP erreicht wird.

Auch Gemische aus den vorstehend beschriebenen Lösungsmitteln kommen für das Trägersystem infrage.
Der Anteil des Lösungsmittels oder des Lösungsmittelsystems L an den erfindungsgemäß konzentrierten Polymerisatdispersionen kann z. B. 80 Gew.-%, in besonders günstigem Fall bis herab zu 20 Gew.-% betragen, vorzugsweise unter 70 Gew.-%, praktisch meist 55 Gew.-% bis 40 Gew.-%.

### Herstellung des Heißsiegelsystems

### Formulierung mit den Polymertypen A - D

### Alternative A:

Mit Hilfe eines geeigneten Emulgators wird, wie vorstehend erläutert, eine Dispersion oder bei geeigneter Abstimmung der Polymerverträglichkeit eine homogene Lösung der Komponenten A und C im Lösungsmittelsystem L hergestellt und unter geeigneten Reaktionsbedingungen die Komponente B auf die Komponente A gepfropft. Im Allgemeinen stehen die Anteile von A und B in Gewichtsverhältnissen von ca. 1 zu 5 bis ca. 5 zu 1. Das Gewichtsverhältnis von A zu C liegt in der Regel zwischen ca. 1 zu 2 und ca. 10 zu 1, bevorzugt zwischen ca. 1 zu1 und ca. 5 zu 1.

### Alternative B:

Mit Hilfe eines geeigneten Emulgators wird, wie vorstehend erläutert, eine Dispersion oder bei geeigneter Abstimmung der Polymerverträglichkeit eine homogene Lösung der Komponente A im Lösungsmittelsystem L hergestellt und hierauf unter geeigneten Reaktionsbedingungen die Komponente B aufgepfropft. Im Allgemeinen stehen die Anteile von A und B in Gewichtsverhältnissen von ca. 1 zu 5 bis ca. 5 zu 1. Zu der so dargestellten Dispersion wird anschließend die Polymerkomponente C gegeben. Das Gewichtsverhältnis von A zu C liegt in der Regel zwischen ca. 1 zu 2 und ca. 10 zu 1 - besser zwischen ca. 1 zu 1 und ca. 5 zu 1.

Der Gehalt des gesamten Polymerisats, bezogen auf die gesamte Dispersion beträgt, unabhängig von dem Herstellungsverfahren, mindestens 10 Gew.-%, wobei in der Praxis 40 Gew.-% bis 80 Gew.-% angestrebt werden, im Normalfall 45 Gew.-% bis 60 Gew.-%.

Nach dem erfindungsgemäßen Verfahren werden heißsiegelfähige Beschichtungsmassen in Dispersion erhalten, die eine ausreichende Stabilität für den Verarbeitungsprozess besitzen. Die Stabilität der Dispersionen beträgt mindestens mehrere Tage, im Normalfall mehrere Wochen bis Monate.

Die erfindungsgemäßen Heißsiegelsysteme zeichnen sich durch gute Haftfestigkeiten und durch Wärmezustandsfestigkeit aus. Sie können zur Versiegelung von Verpackungen, insbesondere von Lebensmittelverpackungen verwendet werden.

### Beispiele

### Verwendetes Folienmaterial

Weichaluminiumfolie mit einer Dicke von 40 µm
Polypropylenfolie, extrudiert aus Granulat JE 6100 (Fa. Shell), Dicke 0,2 mm Polyesterfolie: Hostaphan ^{®} WDW 50

### Rezeptur der Heißsiegellösung

Vor der Verarbeitung muss DEGALAN ^{®} PM 555 bzw. 4150 E gut aufgerührt werden, da bei längerer Lagerung die Möglichkeit einer Phasentrennung besteht.

Die Heißsiegelbindemittel haben in Lieferform (Hersteller: Röhm GmbH & Co. KG) einen Festkörpergehalt von ca. 45% Gew.-% und werden zur Weiterverarbeitung mit Methylethylketon (MEK) auf ca. 30 Gew.-% verdünnt. Zur Haftvermittlung auf der Aluminiumfolie haben sich PVC-Mischpolymerisate bewährt. Sie werden entweder als Grundierung aufgetragen oder in Kombination mit den Heißsiegelbindemitteln eingesetzt. Bei unseren Untersuchungen wurde mit Vinylite ^{®} VMCH 95/5 kombiniert. Bei der Beschichtung von der Polyesterfolie wurde DEGALAN^{®} mit DYNAPOL ^{®} 90/10 und 80/20 kombiniert.

### Auftrag der Heißsiegellösung im Labor

Die Grundierung wurde als 10 Gew.-% Lösung von Vinylite ^{®} VMCH in Ethylacetat mit dem K-Handcoater Nr. 2 auf die Aluminiumfolie (10 cm x 20 cm) aufgezogen. Dies entspricht einer Trockenschichtdicke von 0,5 µm - 1,5 µm.

Die DEGALAN ^{®} -Heißsiegellösung wurde mit dem K-Handcoater Nr. 4 aufgezogen. Dabei wurden Trockenschichtdicken von 7 µm - 9 µm erhalten.

### Trocknung der beschichteten Folien im Labor

Die grundierten Folien wurden nach kurzer Ablüftzeit (5 - 10 Minuten) 15 Sekunden bei 180°C im Umluftofen getrocknet.

### Heißversiegelung und Ermittlung der Siegelnahtfestigkeit

Die Versiegelungen wurden mit dem Heißsiegelgerät (HSG/ET) der Fa. Brugger durchgeführt.

**Siegelbedingungen:**

| | |
|---|---|
| Temperatur: | 200°C |
| Druck: | 6 bar |
| Zeit: | 1 sec. |
| Siegelfläche: | 10 x 10 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90 °C bilden.

Die Versiegelungen der PP-Becher erfolgten mit einem Labor-Becherversieglungsgerät VL-1600 der Firma BHS.

### Ergebnisse der Versuche

### Vergleich der Lösungsmittelsysteme

**Heißsiegeleigenschaften**

| Bezeichnung | | Lösungsmittel L | HSF (N/15 mm) | | |
|---|---|---|---|---|---|
| | | | | | |
| | | | Al /PP | PET/PP | |
| Beispiel 1 | | Propylacetat - iso-Octan - Ethylacetat | 12 | 7,8 | |
| Beispiel 2 | | dito | | 7,0 | |
| Vergleich 1 | | Butylacetat - Methylethylketon | ca. 10 | 1,1 | |
| Vergleich 2 | | dito | | 3,2 | |

| | |
|---|---|
| Zusammensetzung des Polymerisats | Zusammensetzung des Lösungsmittels L: von Beispiel 1 - 2: |
| EPDM/PMMA/PMBA/Polyester | Propylacetat: 54 Gew.-% |
| 42,9/18,55/18,55/20 Gew.-% | iso-Octan: 9,5 Gew.-% |
| | Ethylacetat: 36,5 Gew.-% |

| | |
|---|---|
| Zusammensetzung des Polymerisats | Zusammensetzung des Lösungsmittels L von Vergleich: 1 - 2 |
| EPDM/PMMA/PBMA/Polyester | Butylacetat: 70 Gew.-% |
| 44/18/18/20 Gew.- % | Methylethylketon: 30 Gew.-% |

Sowohl bei Beispiel 1 wie auch bei Vergleich 1 gilt, daß der Anteil an Polymer ca. 45 Gew.-% beträgt und der Anteil Lösungsmittel ca. 55 Gew.-% beträgt.
- EPDM =: Buna EP 6170
- PMMA =: Polymethylmethacrylat
- PBMA =: Polybutylmethacrylat
- Polyester =: Dynapol LH 826

## Patentansprüche

1. Heißsiegelfähiges, zur Versieglung verschiedenartiger Untergründe geeignetes Beschichtungssystem, bestehend aus einer filmbildenden Dispersion mindestens vierer verschiedener Polymertypen A, B, AB, C und gegebenenfalls den Polymertypen D oder D_{A}, einem organischen Lösungsmittelsystem L,
**dadurch gekennzeichnet, dass**
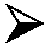 der Polymertyp A ein Olefinpolymer oder ein Olefincopolymer ist,
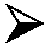 der Polymertyp B ein (Meth)acrylatcopolymer ist, enthaltend Standard(meth)acrylate und in Summe bis zu 15 Gew.% Methacrylsäure und/oder Acrylsäure und/oder eine andere polymerisierbare Säure, bezogen auf den Polymertyp B,
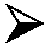 der Polymertyp AB ein Pfropfpolymer aus Polymertyp A und Polymertyp B ist und
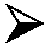 der Polymertyp C ein Polyester oder ein Polyestergemisch ist
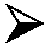 gegebenenfalls noch eine von Polymertypen A-C verschiedene Mischung Polymertyp D oder aus verschiedenen Polymertypen D_{A} vorhanden ist und
dass die Menge an Polymertyp A zwischen 15 Gew.-% und 65 Gew.-% beträgt,
dass die Menge an Polymertyp B zwischen 15 Gew.-% und 65 Gew.-% beträgt,
dass die Menge an Polymertyp AB zwischen 15 Gew.-% und 70 Gew.-% beträgt,
dass die Menge an Polymertyp C zwischen 5 Gew.-% und 50 Gew.-% beträgt,
dass die Menge an Polymertyp D zwischen 0 Gew.-% und 10 Gew.-% beträgt,
dass die Menge an Polymertyp D_{A} zwischen 0 Gew.-% und 10 Gew.-% beträgt, bezogen auf die Gesamtmasse der Polymertypen A - D,
und dass das Masseverhältnis der Summe der Polymertypen A - D zur Masse des Lösungsmittels oder des Lösungsmittelgemischs L zwischen 5:1 und 1:5 beträgt.

2. Heißsiegelfähiges, zur Versieglung verschiedenartiger Untergründe geeignetes Beschichtungssystem nach Anspruch 1
**dadurch gekennzeichnet, dass**
die Menge an Polymertyp A zwischen 20 Gew.-% und 60 Gew.-% beträgt,
die Menge an Polymertyp B zwischen 20 Gew.-% und 60 Gew.-% beträgt,
die Menge an Polymertyp AB zwischen 20 Gew.-% und 65 Gew.-% beträgt
die Menge an Polymertyp C zwischen 5 Gew.-% und 30 Gew.-% beträgt,
die Menge an Polymertyp D zwischen 0 Gew.-% und 5 Gew.-% beträgt,
die Menge an Polymertyp D_{A} zwischen 0 Gew.-% und 5 Gew.-% beträgt,
bezogen auf die Gesamtmasse der Polymertypen A - D und D_{A}.

3. Heißsiegelfähiges, zur Versieglung verschiedenartiger Untergründe geeignetes Beschichtungssystem nach Anspruch 1
**dadurch gekennzeichnet, dass**
die Menge an Polymertyp A zwischen 25 Gew.-% und 55 Gew.-% beträgt,
die Menge an Polymertyp B zwischen 25 Gew.-% und 55 Gew.-% beträgt,
die Menge an Polymertyp AB zwischen 25 Gew.-% und 55 Gew.-% beträgt
die Menge an Polymertyp C zwischen 10 Gew.-% und 25 Gew.-% beträgt,
die Menge an Polymertyp D zwischen 0 Gew.-% und 5 Gew.-% beträgt,
die Menge an Polymertyp D_{A} zwischen 0 Gew.-% und 5 Gew.-% beträgt,
bezogen auf die Gesamtmasse der Polymertypen A - D und D_{A}.

4. Heißsiegelfähiges, zur Versieglung verschiedenartiger Untergründe geeignetes Beschichtungssystem gemäß Anspruch 1 bis 3,
**dadurch gekennzeichnet, dass**
das Lösungsmittelsystem ein Lösungsmittelgemisch aus den Komponenten
L1.) Estern aliphatischer Carbonsäuren mit aliphatischen Alkoholen und
L2.) aliphatischen Kohlenwasserstoffen ist,
wobei das Gewichtsverhältnis von L1.) zu L2.) zwischen 1 und 200 beträgt und der Siedepunkt des Lösungsmittelsystems unter Normalbedingungen maximal 105 Grad Celsius beträgt.

5. Heißsiegelfähiges, zur Versieglung verschiedenartiger Untergründe geeignetes Beschichtungssystem nach Anspruch 4,
**dadurch gekennzeichnet, dass** das Lösungsmittelsystem aus einem Gemisch aus aliphatischen Kohlenwasserstoffen mit 5 - 12 Kohlenstoffatomen in der Kette besteht, wobei die Kette auch verzweigt sein kann.

6. Heißsiegelfähiges, zur Versieglung verschiedenartiger Untergründe geeignetes Beschichtungssystem nach Anspruch 4,
**dadurch gekennzeichnet, dass** das Lösungsmittelsystem aus einem Gemisch aus Estern aliphatischer Carbonsäuren mit 2 - 4 Kohlenstoffatomen in der Kette mit aliphatischen Alkoholen mit 2 - 4 Kohlenstoffatomen in der Kette besteht, wobei die Ketten auch verzweigt sein können.

7. Heißsiegelfähiges, zur Versieglung verschiedenartiger Untergründe geeignetes Beschichtungssystem nach Anspruch 4,
**dadurch gekennzeichnet, dass** das Lösungsmittelsystem aus einem Gemisch aus aliphatischen Kohlenwasserstoffen mit 5 - 12 Kohlenstoffatomen in der Kette besteht, wobei die Kette auch verzweigt sein kann und aus einem Gemisch aus Estern aliphatischer Carbonsäuren mit 2 - 4 Kohlenstoffatomen in der Kette mit aliphatischen Alkoholen mit 2 - 4 Kohlenstoffatomen in der Kette besteht, wobei die Kette auch verzweigt sein kann.

8. Heißsiegelfähiges, zur Versieglung verschiedenartiger Untergründe geeignetes Beschichtungssystem nach Anspruch 4,
**dadurch gekennzeichnet, dass**
das Volumenverhältnis zwischen Estern und aliphatischen Kohlenwasserstoffen zwischen 1 und 200 liegt.

9. Heißsiegelfähiges, zur Versieglung verschiedenartiger Untergründe geeignetes Beschichtungssystem nach Anspruch 4,
**dadurch gekennzeichnet, dass**
die Siedetemperatur des Lösungsmittelsystems zwischen 70 Grad Celsius und 105 Grad Celsius liegt.

10. Heißsiegelfähiges, zur Versieglung verschiedenartiger Untergründe geeignetes Beschichtungssystem nach Anspruch 4,
**dadurch gekennzeichnet, dass**
die Siedetemperatur des Lösungsmittelsystems zwischen 85 Grad Celsius und 100 Grad Celsius liegt.

11. Verfahren zur Versiegelung heißsiegelfähiger Untergründe,
**dadurch gekennzeichnet, dass**
ein Beschichtungssystem nach einem der vorstehenden Ansprüche verwendet wird.

12. Verfahren gemäß Anspruch 11,
**dadurch gekennzeichnet, dass**
man eine Aluminiumfolie oder eine Polyesterfolie mit dem Beschichtungssystem beschichtet und gegen einen Kunststoff, ausgewählt aus der Gruppe der Kunststoffe Polypropylen, Polyethylen, Polystyrol, Polyester oder Polyvinylchlorid siegelt.

13. Heißsiegelfähiges, zur Versieglung verschiedenartiger Untergründe geeignetes Beschichtungssystem nach Anspruch 10,
**dadurch gekennzeichnet, dass** das Lösungsmittelsystem aus einem Gemisch aus Propylacetat (40 bis 70 Vol.-%), Ethylacetat (24 bis 45 Vol.-%) und iso-Octan (5 bis 15 Vol.-%) zusammengesetzt ist.

14. Verpackungssystem,
**dadurch gekennzeichnet, dass**
es mit einem Heißsiegelfähiges, zur Versieglung verschiedenartiger Untergründe geeignetes Beschichtungssystem nach Anspruch 1 versiegelt ist.

15. Lebensmittelverpackungssystem,
**dadurch gekennzeichnet, dass**
es mit einem Heißsiegelfähiges, zur Versieglung verschiedenartiger Untergründe geeignetes Beschichtungssystem nach Anspruch 1 versiegelt ist.

## Claims

1. Heat-sealable coating system which is suitable for the sealing of various types of substrates and is composed of a film-forming dispersion of at least four different polymer types A, B, AB, C, and optionally of the polymer type D or D_{A}, and of an organic solvent system L,
**characterized in that**
• the polymer type A is an olefin polymer or an olefin copolymer,
• the polymer type B is a (meth)acrylate copolymer comprising standard (meth)acrylates and in total up to 15% by weight of methacrylic acid and/or acrylic acid and/or another polymerizable acid, based on the polymer type B,
• the polymer type AB is a draft polymer made of polymer type A and polymer type B and
• the polymer type C is a polyester or a polyester mixture
• and a mixture, differing from polymer types A-C, polymer type D or of various polymer types D_{A} is optionally present and
that the quantity of polymer type A is from 15% by weight to 65% by weight,
that the quantity of polymer type B is from 15% by weight to 65% by weight,
that the quantity of polymer type AB is from 15% by weight to 70% by weight,
that the quantity of polymer type C is from 5% by weight to 50% by weight,
that the quantity of polymer type D is from 0% by weight to 10% by weight,
that the quantity of polymer type D_{A} is from 0% by weight to 10% by weight, based on the total mass of the polymer types A-D,
and that the ratio by mass of the entirety of the polymer types A-D to the mass of the solvent or of the solvent mixture L is from 5:1 to 1:5.

2. Heat-sealable coating system according to Claim 1 which is suitable for the sealing of various types of substrates
**characterized in that**
the quantity of polymer type A is from 20% by weight to 60% by weight,
the quantity of polymer type B is from 20% by weight to 60% by weight,
the quantity of polymer type AB is from 20% by weight to 65% by weight,
the quantity of polymer type C is from 5% by weight to 30% by weight,
the quantity of polymer type D is from 0% by weight to 5% by weight,
the quantity of polymer type D_{A} is from 0% by weight to 5% by weight,
based on the total mass of the polymer types A-D and D_{A}.

3. Heat-sealable coating system according to Claim 1 which is suitable for the sealing of various types of substrates
**characterized in that**
the quantity of polymer type A is from 25% by weight to 55% by weight,
the quantity of polymer type B is from 25% by weight to 55% by weight,
the quantity of polymer type AB is from 25% by weight to 55% by weight,
the quantity of polymer type C is from 10% by weight to 25% by weight,
the quantity of polymer type D is from 0% by weight to 5% by weight,
the quantity of polymer type D_{A} is from 0% by weight to 5% by weight,
based on the total mass of the polymer types A-D and D_{A}.

4. Heat-sealable coating system according to any of Claims 1 to 3 which is suitable for the sealing of various types of substrates,
**characterized in that**
the solvent system is a solvent mixture made of the following components:
L1.) esters of aliphatic carboxylic acids with aliphatic alcohols and
L2.) aliphatic hydrocarbons,
where the ratio by weight of L1.) to L2.) is from 1 to 200 and the boiling point of the solvent system under standard conditions is at most 105 degrees Celsius.

5. Heat-sealable coating system according to Claim 4 which is suitable for the sealing of various types of substrates,
**characterized in that** the solvent system
is composed of a mixture of aliphatic hydrocarbons having from 5 to 12 carbon atoms in the chain, where the chain can also have branching.

6. Heat-sealable coating system according to Claim 4 which is suitable for the sealing of various types of substrates,
**characterized in that** the solvent system
is composed of a mixture of esters of aliphatic carboxylic acids having from 2 to 4 carbon atoms in the chain with aliphatic alcohols having from 2 to 4 carbon atoms in the chain, where the chains can also have branching.

7. Heat-sealable coating system according to Claim 4 which is suitable for the sealing of various types of substrates,
**characterized in that** the solvent system
is composed of a mixture of aliphatic hydrocarbons having from 5 to 12 carbon atoms in the chain, where the chain can also have branching, and of a mixture of esters of aliphatic carboxylic acids having from 2 to 4 carbon atoms in the chain with aliphatic alcohols having from 2 to 4 carbon atoms in the chain, where the chain can also have branching.

8. Heat-sealable coating system according to Claim 4 which is suitable for the sealing of various types of substrates,
**characterized in that**
the ratio by volume between esters and aliphatic hydrocarbons is from 1 to 200.

9. Heat-sealable coating system according to Claim 4 which is suitable for the sealing of various types of substrates,
**characterized in that**
the boiling point of the solvent system is from 70 degrees Celsius to 105 degrees Celsius.

10. Heat-sealable coating system according to Claim 4 which is suitable for the sealing of various types of substrates,
**characterized in that**
the boiling point of the solvent system is from 85 degrees Celsius to 100 degrees Celsius.

11. Process for the sealing of heat-sealable substrates,
**characterized in that**
a coating system according to any of the preceding claims is used.

12. Process according to Claim 11,
**characterized in that**
an aluminium foil or a polyester film is coated with the coating system and is sealed to a plastic selected from the group of the plastics polypropylene, polyethylene, polystyrene, polyester and polyvinyl chloride.

13. Heat-sealable coating system according to Claim 10 which is suitable for the sealing of various types of substrates,
**characterized in that**
the solvent system is composed
of a mixture of propyl acetate (from 40 to 70% by volume), ethyl acetate (from 24 to 45% by volume) and isooctane (from 5 to 15% by volume).

14. Packaging system,
**characterized in that**
it has been sealed with a heat-sealable coating system according to Claim 1 which is suitable for the sealing of various types of substrates.

15. Food packaging system,
**characterized in that** it has been sealed with a heat-sealable coating system according to Claim 1 which is suitable for the sealing of various types of substrates.

## Revendications

1. Système de revêtement thermoscellable, approprié au scellage de supports de nature différente, constitué d'une dispersion filmogène d'au moins quatre polymères différents A, B, AB, C et éventuellement des types de polymères D ou D_{A}, d'un système de solvant organique L,
**caractérisé en ce que**
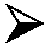 le type de polymère A est un polymère d'oléfine ou un copolymère d'oléfine,
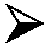 le type de polymère B est un copolymère de (méth)acrylate, contenant des (méth)acrylates standard et au total jusqu'à 15 % en poids d'acide méthacrylique et/ou d'acide acrylique et/ou un autre acide polymérisable, par rapport au type de polymère B,
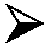 le type de polymère AB est un polymère greffé à base de type de polymère A et de type de polymère B et
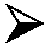 le type de polymère C est un polyester ou un mélange de polyesters
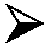 éventuellement encore un mélange de type de polymère D ou de différents types de polymères D_{A}, différent des types de polymères A-C, est présent et
**en ce que** la quantité de type de polymère A est comprise entre 15 % en poids et 65 % en poids, **en ce que** la quantité de type de polymère B est comprise entre 15 % en poids et 65 % en poids,
**en ce que** la quantité de type de polymère AB est comprise entre 15 % en poids et 70 % en poids,
**en ce que** la quantité de type de polymère C est comprise entre 5 % en poids et 50 % en poids,
**en ce que** la quantité de type de polymère D est comprise entre 0 % en poids et 10 % en poids,
**en ce que** la quantité de type de polymère D_{A} est comprise entre 0 % en poids et 10 % en poids, par rapport à la masse totale des types de polymères A - D, et **en ce que** le rapport massique de la somme des types de polymères A - D à la masse du solvant ou du mélange de solvants L est compris entre 5:1 et 1:5.

2. Système de revêtement thermoscellable, approprié au scellage de supports de nature différente, selon la revendication 1
**caractérisé en ce que**
la quantité de type de polymère A est comprise entre 20 % en poids et 60 % en poids,
la quantité de type de polymère B est comprise entre 20 % en poids et 60 % en poids,
la quantité de type de polymère AB est comprise entre 20 % en poids et 65 % en poids,
la quantité de type de polymère C est comprise entre 5 % en poids et 30 % en poids,
la quantité de type de polymère D est comprise entre 0 % en poids et 5 % en poids,
la quantité de type de polymère D_{A} est comprise entre 0 % en poids et 5 % en poids,
par rapport à la masse totale des types de polymères A - D et D_{A}.

3. Système de revêtement thermoscellable, approprié au scellage de supports de nature différente, selon la revendication 1
**caractérisé en ce que**
la quantité de type de polymère A est comprise entre 25 % en poids et 55 % en poids,
la quantité de type de polymère B est comprise entre 25 % en poids et 55 % en poids,
la quantité de type de polymère AB est comprise entre 25 % en poids et 55 % en poids,
la quantité de type de polymère C est comprise entre 10 % en poids et 25 % en poids,
la quantité de type de polymère D est comprise entre 0 % en poids et 5 % en poids,
la quantité de type de polymère D_{A} est comprise entre 0 % en poids et 5 % en poids,
par rapport à la masse totale des types de polymères A - D et D_{A}.

4. Système de revêtement thermoscellable, approprié au scellage de supports de nature différente, selon l'une quelconque des revendications 1 à 3,
**caractérisé en ce que**
le système de solvant est un mélange de solvants à base des composants
L1.) esters d'acides carboxyliques aliphatiques avec des alcools aliphatiques et
L2.) hydrocarbures aliphatiques,
le rapport pondéral de L1.) à L2.) étant compris entre 1 et 200 et le point d'ébullition du système de solvant dans les conditions normales étant au maximum de 105 degrés Celsius.

5. Système de revêtement thermoscellable, approprié au scellage de supports de nature différente, selon la revendication 4,
**caractérisé en ce que** le système de solvant consiste en un mélange d'hydrocarbures aliphatiques ayant de 5 à 12 atomes de carbone dans la chaîne, la chaîne pouvant également être ramifiée.

6. Système de revêtement thermoscellable, approprié au scellage de supports de nature différente, selon la revendication 4,
**caractérisé en ce que** le système de solvant
consiste en un mélange d'esters d'acides carboxyliques aliphatiques ayant de 2 à 4 atomes de carbone dans la chaîne avec des alcools aliphatiques ayant de 2 à 4 atomes de carbone dans la chaîne, les chaînes pouvant également être ramifiées.

7. Système de revêtement thermoscellable, approprié au scellage de supports de nature différente, selon la revendication 4,
**caractérisé en ce que** le système de solvant
consiste en un mélange d'hydrocarbures aliphatiques ayant de 5 à 12 atomes de carbone dans la chaîne, la chaîne pouvant également être ramifiée, et consiste en un mélange d'esters d'acides carboxyliques aliphatiques ayant de 2 à 4 atomes de carbone dans la chaîne avec des alcools aliphatiques ayant de 2 à 4 atomes de carbone dans la chaîne, la chaîne pouvant également être ramifiée.

8. Système de revêtement thermoscellable, approprié au scellage de supports de nature différente, selon la revendication 4,
**caractérisé en ce que**
le rapport volumique entre les esters et les hydrocarbures aliphatiques est compris entre 1 et 200.

9. Système de revêtement thermoscellable, approprié au scellage de supports de nature différente, selon la revendication 4,
**caractérisé en ce que**
la température d'ébullition du système de solvant est comprise entre 70 degrés Celsius et 105 degrés Celsius.

10. Système de revêtement thermoscellable, approprié au scellage de supports de nature différente, selon la revendication 4,
**caractérisé en ce que**
la température d'ébullition du système de solvant est comprise entre 85 degrés Celsius et 100 degrés Celsius.

11. Procédé pour le scellage de supports de nature différente,
**caractérisé en ce**
**qu'**on utilise un système de revêtement selon l'une quelconque des revendications précédentes.

12. Procédé selon la revendication 11,
**caractérisé en ce**
**qu'**on revêt une feuille d'aluminium ou un film de polyester avec le système de revêtement et on la/le scelle sur une matière plastique choisie dans le groupe des matières plastiques polypropylène, polyéthylène, polystyrène, polyester ou poly(chlorure de vinyle).

13. Système de revêtement thermoscellable, approprié au scellage de supports de nature différente, selon la revendication 10,
**caractérisé en ce que** le système de solvant
est composé d'un mélange d'acétate de propyle (40 à 70 % en volume), acétate d'éthyle (24 à 45 % en volume) et iso-octane (5 à 15 % en volume).

14. Système d'emballage,
**caractérisé en ce**
**qu'**il est scellé avec un système de revêtement thermoscellable, approprié au scellage de supports de nature différente, selon la revendication 1.

15. Système d'emballage alimentaire,
**caractérisé en ce**
**qu'**il est scellé avec un système de revêtement thermoscellable, approprié au scellage de supports de nature différente, selon la revendication 1.
